# EUROPÄISCHE PATENTSCHRIFT

(11) **EP 1 272 374 B1**
(45) Veröffentlichungstag und Bekanntmachung des Hinweises auf die Patenterteilung: **29.06.2005**
(21) Anmeldenummer: 01938058.3
(22) Anmeldetag: 27.03.2001
(51) Int. Cl.: B60R 1/06, B60R 1/072

(54) **MOTORISCHE VERSCHWENKEINRICHTUNG FÜR EINE TRÄGER-PLATTE**
MOTORISED TILTING DEVICE FOR A SUPPORT PLATE
DISPOSITIF DE PIVOTEMENT ACTIONNE PAR MOTEUR, DESTINE A UNE PLAQUE DE SUPPORT

(30) Priorität: 12.04.2000 DE 10018205
(43) Veröffentlichungstag der Anmeldung: 08.01.2003
(73) Patentinhaber: Oechsler Aktiengesellschaft, 91522 Ansbach (DE)
(72) Erfinder: WOLF, Wilhelm, 91580 Petersaurach (DE); BOEGELEIN, Josef, 91623 Sachsen (DE); SEIBOTH, Wolfgang, 94438 Bad Windsheim (DE); LANG, Heinrich, 91465 Ergersheim (DE)
(86) Internationale Anmeldenummer: PCT/EP2001/003489
(87) Internationale Veröffentlichungsnummer: WO 2001/079029

(56) Entgegenhaltungen:
- EP-A- 0 316 055
- DE-A- 3 501 454
- US-A- 4 474 428
- US-A- 5 467 230

## Beschreibung

Die Erfindung betrifft eine motorische Verschwenkeinrichtung gemäß dem Oberbegriff des Hauptanspruches.

Aus dem Dokument US 4 474 428 A ist eine motorische Verschwenkeinrichtung für eine Platte nach dem Oberbegriff des Anspruchs 1 bekannt.

Eine ähnliche Einrichtung ist aus der DE 35 01 454 A1 als Getriebe zur Überführung einer rotatorischen in eine translatorische Bewegung bekannt. Eine Schnecke greift dafür in gewindeförmige Profile an der Oberfläche eines in Längsrichtung druckbelastbar geführten und quer zu seiner Breitseite verformbaren Bandes aus federelastischem Werkstoff ein. Die Führung verläuft - aus einer linearen Schiene kommend - am Schneckeneingriff vorbei im großen Bogen um die Schnecke und den zu ihr koaxialen, mit der Schnecke parallel zum Band orientierten Antriebsmotor herum in die Schiene zurück. Dort ist ein Schlitten an eines der beiden freien Enden des Bandes angeschlossen, um ihn längs jener Führungsschiene zu verfahren und dadurch ein Tor zu bewegen. Eine stabile Lagerung und vibrationsfeste Einstellbarkeit des Raumwinkels einer Träger-Platte etwa für einen LKW-Außenspiegel ist mit solch einer platzaufwendigen Schlittenführung allerdings nicht realisierbar.

Speziell für eine Spiegeleinstellung, aber auch zum Verstellen von z.B. Sitzen und Lenkrädern in Fahrzeugen, ist in der DE 33 11 229 A1 hinter einem gemeinsamen Antriebsmotor die Kombination eines Kurbelschleifengetriebes für eine Nickbewegung mit einem weiteren Getriebe zum Umsetzen einer Drehbewegung in eine Longitudinalbewegung derart vorgesehen, daß einer langsamen Schwenkbewegung eine rasche Nickbewegung überlagert wird. Für das Verschwenken der Träger-Platte um einen vertikalen Wellenstumpf ist rückwärtig an die Platte eine Zugstange angelenkt, die infolge federelastischen Eingriffes ihres gegenüberliegenden Endes in eine rotierende Schneckenscheibe periodisch längsverlagert wird. Zugleich erzeugt der ebenfalls rückwärtig an die Platte angelenkte Kurbeltrieb einen oszillierende Bewegung. Das stellt aber gerade auch wegen der Beschränkung auf einen einzigen, den beiden Bewegungsachsen gemeinsamen Motor eine apparativ sehr aufwendige Verstelleinrichtung dar, die angesichts ihrer vielen Gelenkpunkte keinesfalls vibrationssicher ist.

Eine Verschwenkeinrichtung anderer Gattung ist aus der EP 0 316 055 A1 vorbekannt in der Bauform eines Gehäuses zur Aufnahme von je einem reversierbaren elektrischen Kleinmotor für den koordinierten Antrieb von zwei stößelartigen Linearstellgliedern, die gegensinnig bezüglich einander aus dem Gehäuse heraus bzw. in dieses eingefahren werden. Dadurch verschwenken sie eine Trägerplatte um eine Achse mittig quer zur Verbindungslinie zwischen beiden Linearstellgliedern. Das Erfordernis, für diese einfache Schwenkbewegung einer Spiegel-Trägerplatte um eine Schwenkachse gleich zwei gegensinnig koordiniert wirkende motorische Antriebe einsetzen zu müssen, ist allerdings sehr kostenaufwendig. Außerdem ist die Betriebszuverlässigkeit infolge der Gefahr nicht genau synchronen Betriebes beeinträchtigt; denn wenn die beiden Linearstellglieder von ihren Motoren nicht exakt gegensinnig bewegt werden, dann erfolgt keine reproduzierbare Verschwenkbewegung der Trägerplatte um eine gerätefest geometrisch vorgegebene Achse, sondern diese Schwenkachse erfährt einen seitlichen Versatz.

Vorliegender Erfindung liegt das technische Problem zugrunde, eine Verschwenkeinrichtung insbesondere für die Halterungsplatte eines Kfz-Außenspiegels bei kompakterem Aufbau mit geringerem Aufwand an Einzelteilen und funktional robuster zumal in Hinblick auf reproduzierbare und vibrationsfeste Einstellbarkeit auszulegen.

Diese Aufgabe ist erfindungsgemäß dadurch gelöst, daß gemäß den wesentlichen im Hauptanspruch angegebenen Merkmalen die motorische Schwenkbewegung für jede Schwenkachse der Platte mittels wenigstens einer Stell-Stange erfolgt, die beiderseits eines linear geführten, verzahnten Mittenbereiches, an den ein Motorritzel angreift, in einen gebogen verlaufend geführten Bereich übergeht, der aufgrund seiner Materialwahl oder seiner konstruktiven Führung wie der Mittenbereich auf Zug und Druck beanspruchbar ist. Es handelt sich bei dieser aus unterschiedlichen Bereichen bestehenden, nur in ihrem Mittenbereich notwendigerweise gezahnten Stell-Stange also nicht unbedingt um den Einsatz einer konstruktiv aufwendigen da durchgehend in sich flexiblen Zahnstange.

Die Träger-Platte ist auf ihrer der Spiegelfläche gegenüberliegenden Rückseite vorzugsweise zentral, z.B. kugelförmig, am Gehäuse gelagert. Die biegsamen Bereiche der Stell-Stange beiderseits des - vom Stellmotor über ein Untersetzungs-Getriebe etwa parallel zur Träger-Platte längsverschiebbar im Gehäuse gelagerten - linearen Zahnstangen-Bereiches verlaufen jeweils zunächst im Gehäuse durch eine gebogene Führung und dann aus dem Gehäuse hinaus zur davor gehalterten Träger-Platte hin, an deren Rückseite sie mit ihren Stirnenden angelenkt sind. Wenn der Motor den gezahnten Bereich zum Verschwenken der Spiegel-Platte verschiebt, wird somit ein dem gezahnten Bereich benachbarter flexibler Bereich der Stell-Stange auf Zug und der gegenüberliegende Bereich auf Druck beansprucht.

Vorzugsweise gehen die beiden biegeweichen Bereiche beiderseits des zentralen (verzahnten) Abschnittes der Stange vor ihren freien Stirnenden in wieder biegesteife Endstükke über, die eine Linearführung beim Austritt aus dem Gehäuse erfahren und dann an zwei - einander bezüglich der Lagerung der Platte am Gehäuse diametral gegenüberliegenden - Punkten rückseitig an die oder in der Träger-Platte angelenkt sind. Für diese Anlenkung kann auf die Technik der Schnappverbindungen mit kugeligen Überdeckungsflächen als Gelenken zur Bewegungsübertragung zurückgegriffen werden, wie sie im Kunststoff-Spritzguß problemlos funktionszuverlässig herstellbar sind.

Eine gleichartige, in ihrem gezahnten Mittenbereich motorisch angetriebene Stell-Stange kann quer zur ersterwähnten ausgerichtet sein, um die Schwenkbewegung der kugelig gelagerten Platte um zwei Achsen - und dann auch unter deren gleichzeitiger Überlagerung in beliebiger Raumrichtung - durchführen zu können.

Jedenfalls wird beim Verschwenken der Platte um eine Achse immer die eine Hälfte der im Bogen geführten Stell-Stange auf Druck und die ihr gegenüberliegende Hälfte auf Zug beansprucht, was einen mechanisch hoch belastbaren, vibrations- und klemmfrei arbeitenden Schwenkbetrieb sicherstellt, zumal wenn die Platte um einen - infolge ihrer kugel-gelenkigen Lagerung am Gehäuse - konstruktiv definierten Drehpunkt verschwenkbar und an zwei weiteren zueinander distanzierten Punkten über die Endstücke der jeweiligen Stange breit abgestützt ist. Somit ist erfindungsgemäß bei einer stabil arbeitenden Verschwenkeinrichtung insbesondere für die Träger-Platte eines motorisch verstellbaren Kraftfahrzeug-Außenspiegels die Platte gelenkig auf einem ortsfest zu montierenden Gehäuse gelagert, in dem für jede der beiden zueinander orthogonalen (aber auch einander zu beliebiger Raumrichtung überlagerbaren) Schwenkrichtungen ein Getriebemotor angeordnet ist, der mit einer längsverschiebbaren, wenigstens bereichsweise gezahnten und bereichsweise flexiblen Stell-Stange in Eingriff steht. Diese Stange wird beiderseits ihres zentralen Verzahnungsabschnittes in gebogen verlaufenden Führungen aus der Ebene parallel zur Platte in die Querrichtung dazu umgelenkt, um aus dem Gehäuse auszutreten, wo deren Endstükke - nach Überbrücken des Lagerabstandes zwischen Gehäuse und Platte - zur Übertragung von Schub- und Zugbewegungen stimseitig an die Rückseite oder an das Innere der Platte gelenkig angeschlossen sind.

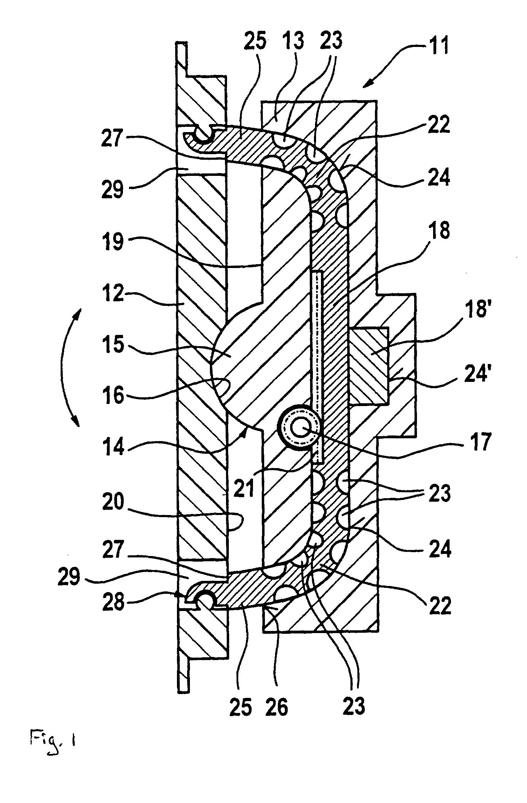

Zur näheren Erläuterung der Erfindung sowie ihrer Abwandlungen und Weiterbildungen wird auf die Unteransprüche und auf nachstehende Beschreibung eines in der Zeichnung nicht ganz maßstabsgerecht und auf das Funktionswesentliche abstrahiert skizzierten bevorzugten Ausführungsbeispiels zur erfindungsgemäßen Lösung verwiesen. Die einzige Figur der Zeichnung zeigt im Querschnitt ein objektfest zu montierendes Gehäuse für die Verschwenkeinrichtung zum Verkippen einer Träger-Platte in allen Raumrichtungen.

Die motorgetriebliche Anordnung der erfindungsgemäßen Verschwenkeinrichtung 11 für eine Träger-Platte 12 etwa zur Aufname eines motorisch verstellbaren Kraftfahrzeugrückspiegels befindet sich im Innern eines ortsfest zu montierenden flachen Gehäuses 13. Dieses ist auf einer seiner beiden großen Außenflächen, der Tragseite 19, mit einem Gelenk 14 in Form einer Kugel-Kappe 15 ausgestattet, auf der die Platte 12 mit einer rückwärtigen Kugel-Schale 16 in allen Raumrichtungen verschwenkbar abgestützt ist.

Im Innern des Gehäuses 13 ist für jede zweier zueinander orthogonaler Schwenkbewegungsmöglichkeiten der Platte 12 ein Kleinspannungs-Getriebemotor 17 angeordnet. Der steht mit dem gezahnten Mittenbereich 21 einer Stell-Stange 18 in Wirkverbindung, um diese je nach der Motor-Drehrichtung längs einer zur Hauptebene des Gehäuses 13 und der Platte 12 etwa parallel verlaufenden Führung 24 in Längsrichtung zu verlagern.

Die weitere Führung 24 für die Stell-Stange 18 verläuft dann, beiderseits des gezahnten Bereiches für den Eingriff des Getriebemotors 17, bogenförmig querab zur Oberfläche der Tragseite 19, um sich hier zur Rückseite 20 der Platte 12 hin zu öffnen. Die Stell-Stange 18 weist jedenfalls im Anschluß an ihren in der Länge begrenzten linear geführten Verzahnungsbereich 21 einen biegeweichen aber dennoch in Längsrichtung relativ starren oder wenigstens knickfest geführten, also außer Zug- auch Druckkräfte übertragenden Bereich 22 auf. Diese Eigenschaft des flexiblen Bereiches 22 kann durch die Materialwahl wie wenigstens streckenweise Ausbildung aus weichem Material der im übrigen biegesteifen Stell-Stange 18 oder wie skizziert durch lokale Querschnittsschwächung etwa infolge konstruktiver Gestaltung wie insbesondere durch gegenseitig aus den Querschnittsebenen versetzte Einkerbungen 23 in der Mantelfläche des biegsamen Bereiches 22 erzielt sein.

Das aus dem gebogen verlaufenden Bereich der Führung 24 in Richtung auf die Platten-Rückseite 20 aus dem Gehäuse 13 austretende Endstück 25 der bereichsweise biegeweichen Stell-Stange 18 ist jedoch vorzugsweise - wie der zentrale Verzahnungsbereich 21 - wieder biegesteif, um durch eine Führungs-Öffnung 26 hindurch eine gehäusefeste Orientierung zu erfahren. In dieser Richtung ist das freie Stirnende 27 nach Durchqueren des von Kappe 15 und Schale 16 bestimmten Abstandes vor der Gehäuse-Tragseite 19 an die Platte 12 angelenkt. So wird die Platte 12 mittels der aus dem Gehäuse 13 austretenden, zumindest bereichsweise (22) biegsamen Stell-Stange 18 auf der Kappe 15 gehaltert. Wie skizziert liegt dabei der gelenkige Anschluß 28 vorzugsweise im Innern der Platte 12, etwa realisiert als quer zum Übergriff belastetes Kugelgelenk in einem rückwärtigen oder die Platte 12 durchquerenden Hohlraum 29.

Wenn die Stell-Stange 18 wie dargestellt beiderseits des Verzahnungsbereiches 21 über einen flexibel in der Bogenführung abgestützten Bereich 22 mit einem geometrisch gerührt aus dem Gehäuse 13 austretenden steifen Endstück 25 an die Platte 12 angeschlossen ist, erbringt das den Vorteil einer vibrationsfesteren symmetrischen Halterung der Platte 12 auf dem zentralen Gelenk 14 und störungsfreier Einstellvorgänge, weil mit der Verschwenkbewegung (angedeutet durch den gebogen Doppelpfeil in der Zeichnung vor der Spiegel-Halterungsplatte 12) immer beim einen Platten-Anschluß 28 eine Zugbeanspruchung und gleichzeitig bezüglich des Gelenkes 14 diametral gegenüber eine Schubbeanspruchung der Stell-Stange 18 auftritt.

Im Gehäuse 13 ist in einer gegenüber der Ebene des bisher betrachteten Verzahnungsabschnittes 21 versetzten Ebene eine weitere, zu jener orthogonal verlaufende Stell-Stange 18' mit Getriebemotor (17) in einer wiederum gebogen verlaufenden Führung 24' angeordnet, um quer zur gezeichneten Schnittrichtung verlaufend an die Platte 12 angelenkt zu sein. Damit wird eine Schwenkbewegung orthogonal zum gezeichneten Doppelpfeil gesteuert; wobei eine Überlagerung beider Schwenkrichtungen zu beliebigen (nur durch konstruktiv bedingte Anschläge begrenzte) Bewegungen der auf der Kugelkappe 15 gelagerten Platte 12 im Raum führt.

## Patentansprüche

1. Motorische Verschwenkeinrichtung (11) für eine mit einem Motor (17) über eine, durch ein objektfestes Gehäuse (13) gebogen geführt in Wirkverbindung stehende t Platte (12), wobei die Platte (12) eine gegenüber dem Gehäuse (13) verschwenkbare Träger-Platte (12) insbesondere zur Aufnahme eines Kraftfahrzeugspiegels ist, die rückseitig auf dem Gehäuse (13) verschwenkbar gelagert und an eine Stell-Stange (18) angelenkt ist, **dadurch gekennzeichnet, daß** die Stell-Stange mit zwei biegeweichen Bereichen (22) beiderseits eines zentralen Verzahnungsbereiches (21) durch gebogene Führungen (24) und dann durch zur Platte (12) hin weisende Führungs-Öffnungen (26) aus dem Gehäuse (13) hinaustretend verläuft, wo deren freien Stirnenden (27) an zwei einander bezüglich der Lagerung diametral gegenüberliegenden Punkten gelenkig an die Rückseite (20) der Platte (12) angelenkt sind.

2. Verschwenkeinrichtung nach Anspruch 1, **dadurch gekennzeichnet, daß** der zentrale Verzahnungsbereich (21) der Stell-Stange (18) beiderseits über einen biegeweichen, in einer gebogenen Führung (24) verlaufenden Bereich (22) in ein an die Platte (12) gelenkig angeschlossenes, dagegen biegesteifes Endstück (25) übergeht, das in gehäusefester Orientierung aus der Führungs-Öffnung (26) austritt.

3. Verschwenkeinrichtung nach Anspruch 1 oder 2, **dadurch gekennzeichnet, daß** zwei unabhängig voneinander verlagerbare Stell-Stangen (18, 18') in unterschiedlichen Ebenen im Gehäuse (13) angeordnet und in gegenseitig orthogonaler Orientierung an die Platte (12) angeschlossen sind.

4. Verschwenkeinrichtung nach einem der vorangehenden Ansprüche, **dadurch gekennzeichnet, daß** ein gelenkiger Anschluß (28) des Stirnendes (27) der Stell-Stange (18) hinter oder in der Platte (12) vorgesehen ist.

5. Verschwenkeinrichtung nach einem der vorangehenden Ansprüche, **dadurch gekennzeichnet, daß** als gelenkige Lagerung der Platte (12) auf dem Gehäuse (13) eine Kugelkappen-Kugelschalen-Kombination (15-16) vorgesehen ist.

6. Verschwenkeinrichtung nach einem der vorangehenden Ansprüche, **dadurch gekennzeichnet, daß** für den Umlenk-Bereich (22) der Stell-Stange (18) ein verformbares aber wenig kompressibles Material eingesetzt ist.

7. Verschwenkeinrichtung nach einem der vorangehenden Ansprüche, **dadurch gekennzeichnet, daß** die Stell-Stange (18) im Umlenk-Bereich (22) über ihrem Querschnitt geschwächte Regionen aufweist.

## Claims

1. Motor-driven pivoting device (11) for a plate (12) operatively connected to a motor (17) first to be guided in a curved manner by means of a housing (13) fixed to an object, the plate (12) being a carrier plate (12) pivotable with respect to the housing (13), in particular for receiving a motor vehicle mirror, said carrier plate being pivotably mounted at the rear on the housing (13) and being articulated on an adjusting rod (18), **characterized in that** the adjusting rod (18) runs with two flexurally soft regions (22), on both sides of a central toothing region (21), through curved guides (24) and then through guide orifices (26), pointing towards the plate (12), so as to emerge from the housing (13), where its free end faces (27) are articulated in a jointed manner on the rear side (20) of the plate (12) at two points located diametrically opposite one another with respect to the mounting.

2. Pivoting device according to Claim 1, **characterized in that** the central toothing region (21) of the adjusting rod (18) merges on both sides, via a flexurally soft region (22) running in a curved guide (24), into a, by contrast, flexurally rigid end piece (25) which is connected to the plates (12) in a jointed manner and which emerges from the guide orifice (26) in an orientation fixed with respect to the housing.

3. Pivoting device according to Claim 1 or 2, **characterized in that** two adjusting rods (18, 18') displaceably independently of one another are arranged in different planes in the housing (13) and are connected to the plate (12) in an orientation in which they are orthogonal to one another.

4. Pivoting device according to one of the preceding claims, **characterized in that** a jointed connection (28) of the end face (27) of the adjusting rod (18) behind or in the plate (12) is provided.

5. Pivoting device according to one of the preceding claims, **characterized in that** a spherical-cap/spherical-cup combination (15 - 16) is provided as a jointed mounting of the plate (12) on the housing (13).

6. Pivoting device according to one of the preceding claims, **characterized in that** a material with deformability, but low compressibility is used for the deflection region (22) of the adjusting rod (18).

7. Pivoting device according to one of the preceding claims, **characterized in that** the adjusting rod (18), over its cross section, has weakened zones in the deflection region (22).

## Revendications

1. Dispositif de pivotement actionné par moteur (11) destiné à une plaque (12) en liaison active avec un moteur (17), conduite de manière courbée par l'intermédiaire d'un boîtier (13) fixe par rapport à l'objet, la plaque (12) étant une plaque de support (12) rotative par rapport au boîtier (13) notamment pour recevoir un miroir de véhicule automobile, qui est disposée de manière rotative à l'arrière sur le boîtier (13) et est articulée au niveau d'une baguette de réglage (18), **caractérisé en ce que** la baguette de réglage avec deux zones souples à la flexion (22) des deux côtés d'une zone d'engrenage (21) centrale sort, par le biais de glissières (24) courbées et ensuite par le biais d'ouvertures de guidage (26) tournées vers la plaque (12), du boîtier (13) où ses extrémités frontales (27) libres sont articulées au niveau de deux points diamétralement opposés l'un par rapport à l'autre en matière de logement de manière articulée au niveau de la face arrière (20) de la plaque (12).

2. Dispositif de pivotement selon la revendication 1, **caractérisé en ce que** la zone d'engrenage (21) centrale de la baguette de réglage (18) se convertit des deux côtés, par l'intermédiaire d'une zone (22) souple à la flexion s'étendant dans une glissière (24) courbée, en une pièce finale (25) reliée de manière articulée à la plaque (12), résistant à la flexion contre cette dernière, qui sort de l'ouverture de guidage (26) suivant une orientation fixe par rapport au boîtier.

3. Dispositif de pivotement selon la revendication 1 ou 2, **caractérisé en ce que** deux baguettes de réglage (18, 18') déplaçables indépendamment l'une de l'autre sont disposées à différents niveaux au sein du boîtier (13) et sont reliées à la plaque (12) suivant une orientation réciproquement orthogonale.

4. Dispositif de pivotement selon l'une des revendications précédentes, **caractérisé en ce qu'**un raccordement (28) articulé de l'extrémité frontale (27) de la baguette de réglage (18) est prévu derrière ou dans la plaque (12).

5. Dispositif de pivotement selon l'une des revendications précédentes, **caractérisé en ce qu'**une combinaison de calotte / cuvette (15-16) est prévue comme logement articulé de la plaque (12) sur le boîtier (13).

6. Dispositif de pivotement selon l'une des revendications précédentes, **caractérisé en ce qu'**un matériau déformable mais peu compressible est utilisé pour la zone de déflection (22) de la baguette de réglage (18).

7. Dispositif de pivotement selon l'une des revendications précédentes, **caractérisé en ce que** la baguette de réglage (18) présente, dans la zone de déflection (22), des régions affaiblies via sa coupe transversale.
